(19) Europäisches Patentamt
European Patent Office
Office européen des brevets

(11) Veröffentlichungsnummer: **0 004 894 A1**

# (12) EUROPÄISCHE PATENTANMELDUNG

(21) Anmeldenummer: **79100981.4**

(22) Anmeldetag: **31.03.79**

(51) Int. Cl.[2]: **C 05 D 9/02**
C 07 F 17/02

(30) Priorität: **13.04.78 DE 2815930**

(43) Veröffentlichungstag der Anmeldung:
**31.10.79 Patentblatt 79/22**

(84) Benannte Vertragsstaaten:
**BE CH DE FR GB IT NL**

(71) Anmelder: **BAYER Aktiengesellschaft**
**Zentralbereich Patente, Marken und Lizenzen Bayerwerk**
**D-5090 Leverkusen 1 (DE)**

(72) Erfinder: **Mues, Volker, Dr.**
**Maréestrasse 61**
**D-5600 Wuppertal 1 (DE)**

(72) Erfinder: **Niggemann, Johannes, Dr.**
**Christian-Hess-Strasse 73**
**D-5090 Leverkusen 1 (DE)**

## (54) Düngemittel zur Versorgung von Pflanzen mit Eisen.

(57) Die Anmeldung betrifft Düngemittel, die das bekannte 3, 5, 5-Trimethylhexanoly-ferrocen der Formel

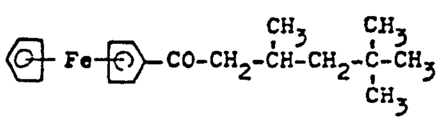

(I)

enthalten, sowie ihre Verwendung zur Verhinderung und Ausheilung von Eisenmangelkrankheiten bei Pflanzen.

EP 0 004 894 A1

Croydon Printing Company Ltd.

0004894



BAYER AKTIENGESELLSCHAFT
Zentralbereich
Patente, Marken und Lizenzen

5090 Leverkusen, Bayerwerk
Dü/Kü
II b

## Düngemittel zur Versorgung von Pflanzen mit Eisen

Die Erfindung betrifft Düngemittel, die das bekannte 3,5,5-Trimethylhexanoyl-ferrocen enthalten, sowie ihre Verwendung zur Verhinderung und Ausheilung von Eisenmangelkrankheiten bei Pflanzen.

Die Verwendung von 3,5,5-Trimethylhexanoyl-ferrocen in Arzneimitteln zur Behandlung von Eisenmangelerscheinungen und Eisenmangelanämien bei Mensch und Tier ist bereits bekannt (vergleiche DT-OS 2 623 486).

Weiter ist bekannt, daß Eisenmangelkrankheiten bei Pflanzen durch Behandlung mit Düngemitteln, welche Ferrocenderivate wie z.B. Propionylferrocen enthalten, verhindert oder behoben werden können (vergleiche DT-OS 2 543 999).

Andere Eisenverbindungen wie z.B. Fetrilon®, ein Produkt auf Basis eines Eisenchelatkomplexes der Äthylendiamintetraessigsäure, sind als Düngemittel bereits im Handel.

Die Wirkung dieser bekannten Stoffe zur Versorgung von Pflanzen mit Eisen ist jedoch, insbesondere bei niedrigen Aufwandmengen, nicht immer ganz befriedigend.

Es wurde nun gefunden, daß das bekannte 3,5,5-Trimethylhexanoyl-ferrocen der Formel

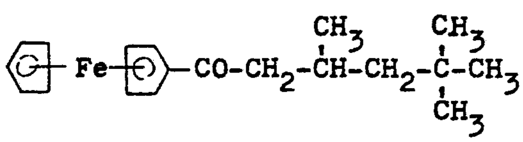

(I)

sehr gut zur Versorgung von Pflanzen mit dem Mikronährstoff Eisen geeignet ist.

Überraschenderweise zeigt 3,5,5-Trimethylhexanoyl-ferrocen eine erheblich bessere Wirksamkeit als Düngemittel zur Versorgung von Pflanzen mit Eisen als das aus dem Stand der Technik bekannte Propionylferrocen und der ebenfalls bekannte Eisenchelatkomplex der Äthylendiamintetraessigsäure, welches ein anerkannt gut wirksamer Stoff gleicher Wirkungsart ist. Die erfindungsgemäße Verwendung des Wirkstoffes der Formel (I) stellt somit eine wertvolle Bereicherung der Technik dar.

Die erfindungemäß verwendbare Verbindung 3,5,5-Trimethylhexanoyl-ferrocen ist bekannt und kann beispielsweise durch Umsetzung von Ferrocen mit 3,5,5-Trimethylhexansäurechlorid in einem inerten Lösungsmittel wie z.B. Methylenchlorid und in Gegenwart von Aluminiumchlorid hergestellt werden (vergleiche DT-OS 2 623 486).

Die Verwendung von 3,5,5-Trimethylhexanoyl-ferrocen zur Versorgung von Pflanzen mit dem Mikronährstoff Eisen ist jedoch neu.

3,5,5-Trimethylhexanoyl-ferrocen eignet sich hervorragend zur Versorgung von Pflanzen mit Eisen. Mit besonderem Vorteil läßt es sich zur Blattdüngung verwenden, da es gut durch die Blätter aufgenommen werden kann. Die Verbindung kann deshalb zur Verhinderung und Ausheilung von Eisenmangelkrankheiten bei Pflanzen eingesetzt werden.

Zu den Pflanzen, die für Eisen-Mangelkrankheiten (Eisen-Mangelchlorosen) anfällig sind, gehören: Getreidearten (z.B. Reis, Mais und Hirse), Knollen- und Wurzelfrüchte (z.B. Zuckerrübe ), Ölfrüchte (z.B. Sojabohne, Erdnuß, Olive und Sonnenblume), Obst (z.B. Pfirsisch, Birne, Apfel, Aprikose, Pflaume, Kirsche, Quitte, Citrus, Weinrebe, Haselnuß, Walnuß, Johannisbeere, Stachelbeere, Himbeere, Brombeere, Blaubeere, Ananas und Avacado), Gemüse (z.B. Salat, Ackerbohne, Erbse, Tomate und Melone), Ziergehölze (z.B. Rosa, Eucalyptus, Liquidambar, Mimose, Ulmus, Catalpa, Spirea, Pyracantha, Juniperus, Ligustrum, Hiniscus, Syringa und Hydrangea), Stauden (z.B. Delphinium, Primula, Paenia, Papacer, Anthirrhinum, Iris und Lupinus), Topf- und Sommerblumen (z.B. Pelargonium, Petunia, Gardenia, Calceolaria, Chrysanthemum, Kamelis und Begonia),

Moorbeetpflanzen (z.B. Azalea, Rhododendron, Erica und Skimmia) und Gräser (z.B. Rasengräser).

Das erfindungsgemäß verwendbare 3,5,5-Trimethylhexanoyl-ferrocen kann als solches oder in Form von Formulierugen zur Versorgung von Pflanzen mit Eisen eingesetzt werden.

Der neue Wirkstoff kann in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in ULV-Kalt und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester,

Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Notmaldruck gasförmig sind, z.B. Aerosol-Treibgas, wie Halogenkohlenwasserstoffe sowie Butan, Propan, Stickstoff und Kohlendioxid; als feste Trägerstoffe: natürliche Gesteinsmehle, wie Kaoline, Tonerden, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Domomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierugen enthalten im allgemeinen zwischen 0,1 und 96 Gewichtsprozent Wirkstoff, vorzugsweise zwischen 0,5 und 90 %.

Der erfindungsgemäß verwendbare Stoff zur Versorgung von Pflanzen mit Eisen kann in den Formulierungen in Mischung mit anderen Düngemitteln oder pestiziden Wirkstoffen vorliegen.

Der Wirkstoff kann als solcher, in Form seiner Formulierungen oder der daraus bereiteten gebrauchsfertigen Lösungen, Emulsionen, Schäume, Suspensionen, Pulver, Pasten und Granulate angewendet werden. Die Anwendung geschieht nach den in der Landwirtschaft und im Gartenbau üblichen Methoden, also z.B. durch direktes Einbringen in den Boden, durch Gießen, Verspritzen, Versprühen, Verstreuen, Verstäuben usw. Als spezielle Applikationsarten seien genannt: Wurzelapplikation, Blattapplikation, Stamminjektion und Rindenapplikation. Bei der Wurzelapplikation kann der Dünger entweder mit dem Kultursubstrat vermischt oder auch in Bodenfurchen eingebracht werden. Ferner ist es möglich, den Dünger mit Hilfe einer Düngerlanze sowie durch Schlag- oder Bohrlöcher in den tieferen Wurzelbereich einzuführen. Die Blattapplikation erfolgt in der Regel dadurch, daß man die Pflanzen

mit einer Düngemittel-Lösung besprüht oder Pflanzen bzw. Pflanzenteile in eine Düngemittel-Lösung eintaucht. Bei der Stamminjektion wird der Dünger durch Bohrlöcher an Baumstämmen oder Ästen direkt in die Pflanzen eingeführt. Rindenapplikationen können vorgenommen werden, indem man das kahle Holz mit der Düngemittel-Lösung bespritzt, oder auch indem man mit Nährstoff imprägnierte Bänder aus Papier, Textil oder Schaumstoff auf Baumstämme oder Äste, - gegebenenfalls nach teilweiser oder vollständiger Entfernung der Borken- bzw. Korkschicht in der Behandlungszone-, auflegt. Auch ist eine Rindenapplikation mit Hilfe nährstoffhaltiger Pasten möglich. Eine Ausbringung des erfindungsgemäß verwendbaren Stoffes nach dem Ultra-low-volume-Verfahren (ULV-Verfahren) ist ebenfalls möglich.

Die eingesetzte Menge an 3,5,5-Trimethylhexanoyl-ferrocen kann in einem größeren Bereich variiert werden. Sie hängt im wesentlichen ab von der Bodenart sowie vom Nährstoffbedarf der jeweiligen Pflanze. Im allgemeinen liegen die Aufwandmengen an Wirkstoff zwischen 0,1 und 100 kg/ha, vorzugsweise zwischen 1 und 50 kg/ha.

Das 3,5,5-Trimethylhexanoyl-ferrocen eignet sich sehr gut zur Bekämpfung und Ausheilung von Eisenmangelkrankheiten bei Pflanzen. So läßt sich zum Beispiel bei völlig chlorotischen Chrysanthemen (Chrysanthemu indicum; Sorte: Yellow Delaware) der Eisenmangel durch Behandlung der Pflanzen mit dem erfindungsgemäß verwendbaren Ferrocen-Derivat stark verringern oder sogar völlig beheben.

Die gute Wirksamkeit der erfindungsgemäß verwendbaren Verbindung zur Versorgung von Pflanzen mit Eisen geht aus dem nachfolgenden Beispiel hervor.

Beispiel A

Eisenmangel-Bekämpfung / Blattaufnehmbarkeits-Test

Versuchspflanze: Chrysanthemum indicum (Sorte: Yellow Delaware)

Kultursubstrat: Gemisch aus Polystyrolschaumstoff-Flocken (Styromull) und Kaliumalginat im Volumenverhältnis 10:1

Wirkstoffzubereitung: Zur Herstellung einer zweckmäßigen Wirkstoffzubereitung löst man die jeweils gewünschte Menge an Wirkstoff in Wasser. Bei Wirkstoffen mit geringer Wasserlöslichkeit erfolgt die Herstellung der Wirkstoffzubereitung dadurch, daß man 1 g Wirkstoff in 10 ml eines Formulierungsgemisches (FG), bestehend aus 47 Volumenteilen Dimethylformamid, 47 Volumenteilen Aceton und 6 Volumenteilen an Alkylarylpolyglykoläther (Emulgator), auflöst und das so erhaltene Konzentrat anschließend mit Wasser auf die gewünschte Konzentration verdünnt.

In einem Kultursubstrat der oben angegebenen Zusammensetzung werden Versuchspflanzen angezogen, wobei die Düngung und die Bewässerung dadurch erfolgt, daß man

zweimal wöchentlich eine mineralische Eisenmangel-Nährlösung nach Hoagland und Arnon (Circular 347, College of Agriculture, University of California, Berkeley 1950) hinzugibt. Die so angezogenen völlig chlorotischen Versuchspflanzen werden in Fünfblattstadium mit der Wirkstoffzubereitung tropfnaß besprüht, wobei durch Abdecken dafür gesorgt wird, daß die Wirkstoffzubereitung nicht in das Kultursubstrat gelangt. Nach 2 Tagen wird erneut in gleicher Weise mit der Wirkstoffzubereitung besprüht. Die Auswertung erfolgt dann, wenn bei den mit einem wasserlöslichen, handelsüblichen Eisen-Dünger in optimaler Menge behandelten Pflanzen durchschnittlich 3 Blätter neu gebildet sind. Es wird jeweils die durchschnittliche Anzahl neu gebildeteter Blätter bei allen Versuchspflanzen ermittelt. Ferner wird die Intensität der Grünfärbung von neu gebildeten Blättern bonitiert und durch Kennzahlen ausgedrückt.
Dabei bedeuten:

| | | | | |
|---|---|---|---|---|
| Kennzahl | 1 | = | 0 %-ig chlorotisch | (dunkelgrün) |
| Kennzahl | 3 | = | 25 %-ig chlorotisch | |
| Kennzahl | 5 | = | 50 %-ig chlorotisch | |
| Kennzahl | 7 | = | 75 %-ig chlorotisch | |
| Kennzahl | 9 | = | 100 %-ig chlorotisch | (entsprechend den unbehandelten Kotrollpflanzen) |

Wirkstoff, Wirkstoffkonzentrationen und Versuchsergebnisse gehen aus der nachfolgenden Tabelle hervor:

<u>Tabelle A</u>

Eisenmangelbekämpfung / Blattausnehmbarkeits-Test

Versuchspflanze: Chrysamthemeum indicum / Sorte; Yellow Delaware

| Nährstoff-Präparat | Wasserlöslichkeit des Präparates | Nährstoffpräparatkonzentration in Spritzflüssigkeit (%) | Intenistät der Grünfärbung junger Blätter | Ø Anzahl neu gebildeter Blätter |
|---|---|---|---|---|
| (Kontrolle) | - | - | 9 | 0 |
| "Fetrilon" + (bekannt) | voll | 0,2 | 8 | 3 |
| 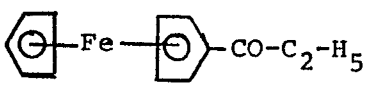 bekannt | gering | 0,02<br>0,1<br>0,5 | 8<br>3<br>2 | 3<br>4<br>5 |
| 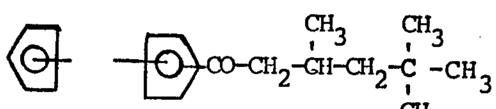 (erfindungsgemäß) | gering | 0,02<br>0,1<br>0,5 | 3<br>2<br>1 | 4<br>5<br>7 |

+ "Fetrilon" = handelsüblicher Eisendünger auf Basis eines Eisenchelatkomplexes des Äthylendiamin-tetraessigsäure-Natriumsalzes.

Herstellungsbeispiel

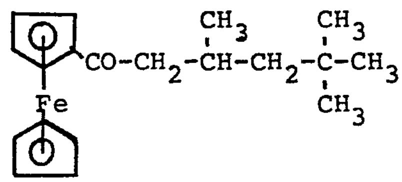

In ein Gemisch aus 266 g (2,0 Mol) Aluminiumchlorid in 2000 ml Methylenchlorid werden bei 20 - 24°C unter Rühren 354 g (2,0 Mol) 3,5,5-Trimethylhexansäurechlorid (Reinheitsgrad gemäß Gaschromatogramm 90%) gegeben. Man läßt 10 Minuten nachrühren und tropft diese klare, rotbraune Lösung dann bei 20 - 25°C unter Rühren und unter leichter Kühlung in eine Lösung von 372 g (2,0 Mol) Ferrocen in 1500 ml Methylenchlorid. Das Reaktionsgemisch wird über Nacht bei Raumtemperatur gerührt. Zur Aufarbeitung gießt man das Reaktionsgemisch in 8 l etwa 5°C kaltes Wasser, trennt die organische Phase ab, wäscht diese dreimal mit Wasser, trocknet über Natriumsulfat, zieht das Lösungsmittel ab und destilliert an. Es verbleiben 546 g (94,0% bezogen auf reines 3,5,5-Trimethylhexansäurechlorid) an 3,5,5-Trimethylhexanoyl-ferrocen in Form eines öligen, allmählich kristallisierenden Produktes, das zwischen 35 und 40°C schmilzt.

Patentansprüche:

1) Düngemittel zur Versorgung von Pflanzen mit Eisen, sowie zur Verhütung und Ausheilung von Eisen-Mangelkrankheiten bei Pflanzen, gekennzeichnet durch einen Gehalt an 3,5,5-Trimethylhexanoyl-ferrocen der Formel

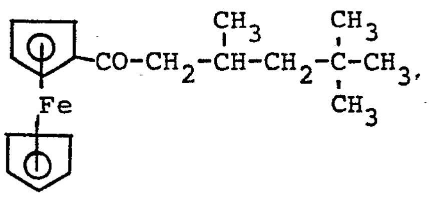

(I)

2) Verfahren zur Versorgung von Pflanzen mit Eisen sowie zur Verhütung und Ausheilung von Eisen-Mangelkrankheiten bei Pflanzen, dadurch gekennzeichnet, daß man 3,5,5-Trimethylhexanoyl-ferrocen gemäß Anspruch 1 auf Pflanzen oder deren Lebensraum einwirken läßt.

3) Verwendung von 3,5,5-Trimethylhexanoyl-ferrocen gemäß Anspruch 1 zur Versorgung von Pflanzen mit Eisen sowie zur Verhütung und Ausheilung von Eisen-Mangelkrankheiten bei Pflanzen.

4) Verfahren zur Herstellung von Düngemitteln zur Versorgung von Pflanzen mit Eisen sowie zur Verhütung und Ausheilung von Eisen-Mangelkrankheiten bei Pflanzen, dadurch gekennzeichnet, daß man 3,5,5-Trimethylhexanoyl-ferrocen gemäß Anspruch 1 mit Streckmitteln und/oder oberflächenaktiven Mitteln vermischt.

0004894

Nummer der Anmeldung

EP 79 10 0981

Europäisches Patentamt

# EUROPÄISCHER RECHERCHENBERICHT

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| D | DE - A - 2 543 999 (BAYER)<br>* Seite 1; Anspruch 1; Seite 48, Beispiel 10 *<br>-- | 1 | C 05 D 9/02<br>C 07 F 17/02 |
| D | DE - A - 2 623 486 (HOECHST)<br>* Seite 1; Anspruch 1; Seite 2, Absätze 1,2 *<br>-- | 1 | |
| | | | RECHERCHIERTE SACHGEBIETE (Int. Cl.²) |
| A | DE - A - 2 453 977 (FISONS) | | |
| A | DE - A - 2 453 936 (FISONS) | | |
| A | FR - A - 2 128 074 (ORDENA LENINA INSTITUT ELEMENTOORGANICHESKIKH SOEDINENY AKADEMII NAUK) | | C 05 D 9/02<br>C 07 F 17/02 |
| A | US - A - 3 558 780 (BUBLITZ)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 25-07-1979 | STEELANDT |